# EUROPÄISCHE PATENTSCHRIFT

(11) **EP 1 838 781 B1**
(45) Veröffentlichungstag und Bekanntmachung des Hinweises auf die Patenterteilung: **18.02.2009**
(21) Anmeldenummer: 05849213.3
(22) Anmeldetag: 31.12.2005
(51) Int. Cl.: C08L 53/02

(54) **STYROL-BUTADIEN-BLOCKCOPOLYMERMISCHUNGEN FÜR SCHRUMPFFOLIEN**
STYROL/BUTADIENE BLOCK COPOLYMER MIXTURES FOR SHRINK FILMS
MELANGES DE COPOLYMERES BLOCS STYRENE-BUTADIENE POUR FILMS RETRACTABLES

(30) Priorität: 12.01.2005 DE 102005001637
(43) Veröffentlichungstag der Anmeldung: 03.10.2007
(73) Patentinhaber: BASF SE, 67056 Ludwigshafen (DE)
(72) Erfinder: KNOLL, Konrad, 68199 Mannheim (DE); STEININGER, Helmut, 67551 Worms (DE); SCHUSTER, Michael, 68163 Mannheim (DE); WAGNER, Daniel, 67098 Bad Dürkheim (DE); MERKEL, Peter, 67308 Zellertal (BE)
(86) Internationale Anmeldenummer: PCT/EP2005/014166
(87) Internationale Veröffentlichungsnummer: WO 2006/074819

(56) Entgegenhaltungen:
- EP-A- 1 498 438
- WO-A-99/46330
- WO-A-03/046075

## Beschreibung

Die Erfindung betrifft eine Mischung, die
a) 5 bis 50 Gew.-% eines Blockcopolymeren A, welches ein oder mehrere Copolymerblöcke (B/S)_{A} aus jeweils 65 bis 95 Gew.-% vinylaromatischen Monomeren und 35 bis 5 Gew.-% Dienen und einer Glasübergangstemperatur Tg_{A} im Bereich von 40° bis 90°C,
b) 95 bis 50 Gew.-% eines Blockcopolymeren B, welches mindestens einen Hartblock S aus vinylaromatischen Monomeren und ein oder mehrere Copolymerblöcke (B/S)_{B} aus jeweils 20 bis 60 Gew.-% vinylaromatischen Monomeren und 80 bis 40 Gew.-% Dienen und einer Glastemperatur Tg_{B} im Bereich von -70° bis 0°C,
c) 0 bis 45 Gew.-% eines von A und B verschiedenen Blockcopolymeren C oder Polystyrol und
d) 0 bis 6 Gew.-% eines Plastifizierungsmittels
enthält, sowie deren Verwendung zur Herstellung von Schrumpffolien.

Die Verwendung von Styrol-Butadien-Blockcopolymeren als hitzeschrumpfbare Folien ist beispielsweise aus EP-A 058 952 oder EP-A 436 225 bekannt. Die Folien werden in der Wärme bei ca. 60 bis 100°C auf bis zu über 500% gereckt und der gereckte Zustand nach Abkühlen auf Raumtemperatur fixiert. Nach der Verarbeitung zu Hülsen können diese bedruckt und beispielsweise über eine Flasche gestülpt werden und in einem Wärmetunnel bei ca. 70 bis 90°C wieder zusammenschrumpfen, wobei sich die Folie an die Flasche anschmiegt.

Schrumpffolien sollten bei der Anwendung in der Wärme nahezu auf die Ausgangsgröße schrumpfen, jedoch gleichzeitig eine hohe Lagerstabilität aufweisen, das heißt sie sollten bei Temperaturen um 20 bis 30°C keinen Schrumpf zeigen. Des weiteren sollten sie neben einer hohen Transparenz auch eine hohe Steifigkeit und Festigkeit aufweisen.

Die EP-A 852240 beschreibt Styrol-Butadien-Blockcopolymere, die nach der Orientierung in der Wärme eine verringerte spontane Schrumpfung bei 30°C aufweisen sollen.

Aufgabe der Erfindung war es, Styrol-Butadien-Blockcopolymere zu finden, die zu lagerstabilen, hitzeschrumpfbaren Folien mit hohem Schrumpfvermögen und hoher Steifigkeit/Festigkeit verarbeitet werden können. Des weiteren sollten die Folien auch figkeit/Festigkeit verarbeitet werden können. Des weiteren sollten die Folien auch nach dem Recken und Schrumpfen eine hohe Transparenz aufweisen.

Demgemäß wurde die oben genannte Mischung aus Blockcopolymeren gefunden.

Bevorzugt enthält die Mischung 20 bis 40 Gew.-% des Blockcopolymeren A, 80 bis 60 Gew.-% des Blockcopolymeren B und 0 bis 20 Gew.-% eines von A und B verschiedenen Blockcopolymeren C oder Polystyrol. Neben den Blockcopolymeren A, B und gegebenenfalls C kann die Mischung noch geringere Mengen an weiteren thermoplastischen Polymeren und 1 bis 6 Gew.-% üblicher Hilfsstoffe, wie Plastifizierungsmittel enthalten. Als Plastifizierungsmittel können 0 bis 6 Gew.-%, bevorzugt 2 bis 4 Gew.-% eines homogen mischbaren Öls oder Ölgemisches, insbesondere Weißöl oder DioktylAdipat oder deren Mischungen verwendet werden. Besonders gute Schrumpfwerte erhält man bei einem Weißölgehalt der Mischung von 2,5 bis 3,5 Gew.-%, bezogen auf die Mischung.

### Blockcopolymer A:

Die Mischung enthält 5 bis 50 Gew.-% eines Blockcopolymeren A, welches ein oder mehrere Copolymerblöcke (B/S)_{A} aus jeweils 65 bis 95 Gew.-% vinylaromatischen Monomeren und 35 bis 5 Gew.-% Dienen und einer Glasübergangstemperatur Tg_{A} im Bereich von 40° bis 90°C enthält

Die Glasübergangstemperatur des Copolymerblocks (B/S)_{A} liegt bevorzugt im Bereich von 50 bis 70°C. Die Glasübergangstemperatur wird durch die Comonomerzusammensetzung beeinflusst und kann durch Differential Scanning Calorimetrie (DSC) oder Differential Thermal Analysis (DTA) bestimmt oder gemäß der Fox-Gleichung berechnet werden. Bevorzugt besteht der Copolymerblock (B/S)_{A} aus 80 bis 90 Gew.-% Styrol und 10 bis 20 Gew.-% Butadien.

Bevorzugt werden Blockcopolymere A, welche ein oder mehrere Copolymerblöcke (B/S)_{A} aus vinylaromatischen Monomeren und Dienen mit statistischer Verteilung enthalten. Diese können beispielsweise durch anionische Polymerisation mit Lithiumalkylen in Gegenwart von Randomizern wie Tetrahydrofuran oder Kaliumsalzen erhalten werden. Bevorzugt werden Kaliumsalze mit einem Verhältnis von anionischem Initiator zu Kaliumsalz im Bereich von 25:1 bis 60:1 verwendet. Dadurch kann gleichzeitig ein niedriger Anteil an 1,2-Verknüpfungen der Butadieneinheiten erreicht werden.

Bevorzugt liegt der Anteil der 1,2-Verknüpfungen der Butadieneinheiten im Bereich von 8 bis 15%, bezogen auf die Summe der 1,2-, 1,4-cis- und 1,4-trans-Verknüpfungen.

Besonders bevorzugt besteht das Blockcopolymer A aus einem einzigen Copolymerblock (B/S)_{A} oder weist lineare Strukturen, wie S-(B/S)_{A} oder S-(B/S)_{A}-S auf, wobei S jeweils für einen Hartblock aus vinylaromatischen Monomeren steht. Ebenfalls bevorzugt sind Sternpolymere [(B/S)_{A}]ₙ mit n Sternästen, die durch Kopplung mit einem n-funktionellen Kopplungsmittel oder durch Initiierung mit einem n-funktionellen Initiator zugänglich sind. Als Kopplungsmittel geeignet ist z.B. epoxidiertes Pflanzenöl wie epoxidiertes Leinsamen- oder Sojabohnenöl. Man erhält in diesem Fall Sterne mit 3 bis 5 Ästen. ebenfalls bevorzugt sind Sternblockcopolymere [S-(B/S)_{A}]ₙ.

Statistische Polymere (B/S)_{A} können aber auch durch radikalische Polymerisation hergestellt werden

Die gewichtsmittlere Molmasse M_{w} des Copolymerblocks (B/S)_{A} liegt in der Regel im Bereich von 50.000 bis 400.000 g/mol, bevorzugt im Bereich von 60.000 bis 200.000 g/mol, besonders bevorzugt im Bereich von 100.000 bis 160.000 g/mol. Für die Strukturen, wie S-(B/S)_{A} oder S-(B/S)_{A}-S liegt das gewichtsmittlere Molekulargewicht M_{w} für jeden Block S bevorzugt im Bereich von 15.000 bis 45.000 g/mol liegt. Bevorzugt bestehen die Blöcke S aus Styroleinheiten. Bei den anionisch hergestellten Polymeren erfolgt die Kontrolle der Molmasse über das Verhältnis von Monomer- zu Initiatormenge. Initiator kann aber auch mehrfach nach bereits erfolgter Monomerdosierung zugegeben werden, dann erhält man eine bi- oder multimodale Verteilung. Bei radikalisch hergestellten Polymeren wird M_{w} über die Polymerisationstemperatur und/oder den Zusatz von Reglern eingestellt.

### Blockcopolymer B

Als Blockcopolymer B enthält die erfindungsgemäße Mischung 95 bis 50 Gew.-% eines Blockcopolymeren B, welches mindestens einen Hartblock S aus vinylaromatischen Monomeren und ein oder mehrere Copolymerblöcke (B/S)_{B} aus jeweils 20 bis 60 Gew.-% vinylaromatischen Monomeren und 80 bis 40 Gew.-% Dienen und einer Glasübergangstemperatur Tg_{B} im Bereich von -70° bis 0°C, bevorzugt im Bereich von - 65°C bis -20°C, enthält.

Als Blockcopolymere B eignen sich insbesondere steife Blockcopolymere, welche aus 60 bis 90 Gew.-% vinylaromatischen Monomeren und 10 bis 40 Gew.-% Dien, bezogen auf das gesamte Blockcopolymer, bestehen und aus überwiegend vinylaromatischen Monomeren, insbesondere Styrol enthaltenden Hartblöcken S und Diene, wie Butadien und Isopren enthaltenden Weichblöcken B oder B/S aufgebaut sind. Besonders bevorzugt sind Blockcopolymere mit 70-80 Gew.-% Styrol und 20-30 Gew.-% Dien.

Die Copolymerblöcke (B/S)_{B} des Blockcopolymeren B weisen bevorzugt eine statistischer Verteilung der vinylaromatischen Monomeren und Dienen auf.

Bevorzugte Blockcopolymere B weisen eine sternförmige Struktur mit mindestens zwei endständigen Hartblöcke S₁ und S₂ mit unterschiedlichem Molekulargewicht aus vinylaromatischen Monomeren auf, wobei der Anteil der Summe der Hartblöcke S mindestens 40 Gew.-%, bezogen auf das gesamte Blockcopolymer B beträgt. Möglich sind auch lineare Strukturen, wie (B/S)_{B}-S₂ oder S₁-(B/S)_{B}-S₂. Bevorzugt weisen die entständigen Blöcke S₁ eine zahlenmittlere Molmasse Mₙ im Bereich von 5.000 bis 30.000 g/mol und S₂ eine zahlenmittleren Molmasse Mₙ im Bereich von 35.000 bis 150.000 g/mol auf.

Bevorzugt sind polymodale Styrol-Butadien-Blockcopolymere mit endständigen Styrolblöcken, wie sie beispielsweise in DE-A 25 50 227 oder EP-A 0 654 488 beschrieben sind.

Besonders bevorzugt werden Blockcopolymere B mit mindestens zwei Hartblöcke S₁ und S₂ aus vinylaromatischen Monomeren und mindestens einem dazwischenliegenden, statistischen Weichblock (B/S)_{B} aus vinylaromatischen Monomeren und Dienen, wobei der Anteil der Hartblöcke über 40 Gew.-%, bezogen auf das gesamte Blockcopolymer beträgt und der 1,2-Vinylgehalt im Weichblock B/S unter 20 % beträgt, wie sie in WO 00/58380 beschrieben sind.

Die erfindungsgemäßen Mischungen sind hoch transparent und eignen sich insbesondere zur Herstellung von Schrumpffolien. Sie sind lagerstabil und zeigen bei 40°C bis 50°C keinen nennenswerten Schrumpf. Im Bereich von 90 bis 100°C ist der Schrumpfgrad hoch, was eine flexible Anpassung an die Verarbeitungsbedingungen sowie das Umhüllen von stark bauchigen Formen ermöglicht.

### Beispiele:

### Blockcopolymer A

Zur Herstellung der linearen Styrol-Butadien-Blockcopolymeren A2 bis A10 der Struktur B/S wurden Cyclohexan vorgelegt, bei 60°C mit jeweils 1,6 ml sec-Butyllithium (BuLi) austitriert und anschließend mit den in Tabelle 1 genannten Mengen an sec.-Butyllithium zur Initiierung und Kalium-tert.-Amylat (KTA) als Randomizer versetzt und auf 40°C abgekühlt. Polymerisiert wurde in zwei Portionen. Jeweils die Hälfte der in Tabelle 1 angegebenen Styrol- und Butadienmengen wurde gleichzeitig zugegeben und die Maximaltemperatur durch Gegenkühlen auf 75°C begrenzt. Danach wurden die lebenden Polymerketten durch Zugabe von Isopropanol terminiert, mit CO₂/Wasser angesäuert und eine Stabilisatorlösung zugegeben. Das Cyclohexan wurde im Vakuumtrockenschrank eingedampft.

Zur Herstellung des linearen Styrol-Butadien-Blockcopolymeren A1 mit der Struktur S-(B/S)-S erfolgte die Zugabe der Monomeren in drei Portionen, wobei jeweils vor und nach den gemeinsamen Styrol-Butadienzugaben zur Polymerisation des mittleren (S/B)-Blockes jeweils 400 g Styrol zur Bildung der endständigen Styrolblöcke zugegeben und auspolymerisiert wurden. Ansonsten wurde wie zur Herstellung der Blockcopolymeren A2 bis A10 entsprechend den Angaben in Tabelle 1 verfahren.

Einsatzstoffe, Struktur und Molekulargewichte der Blockcopolymeren A1 bis A10 sind in Tabelle 1 zusammengefasst.

**Tabelle 1: Struktur und Eigenschaften der Blockcopolymeren A1 bis A10**

| | | | Cyclo | | KTA | | | | | |
|---|---|---|---|---|---|---|---|---|---|---|
| | | | hexan | sec-BuLi | 0,1175 M | Styrol | Butadien | Isopropanol | | |
| | Struktur | Tg [°C] | [ml] | 1,4 M [ml] | [ml] | [g] | [g] | [ml] | Mn (GPC) | Mw (GPC) |
| | | | | | | 400(S) | | | | |
| | | | | | | 664 (S/B) | 136 (SB) | | | |
| A1 | S-S/B-S | 50 | 4786 | 8,79 | 3,02 | 400 (S) | | 1,41 | 122.000 | 146.000 |
| A2 | S/B | 70 | 4786 | 19,05 | 6,55 | 1440 | 160 | 3,06 | 63.000 | 71.000 |
| A3 | S/B | 70 | 2991 | 7,14 | 2,53 | 900 | 100 | 1,15 | 97.000 | 108.000 |
| A4 | S/B | 70 | 2991 | 5,1 | 1,81 | 900 | 100 | 0,82 | 130.000 | 149.000 |
| A5 | S/B | 70 | 2991 | 4,46 | 1,58 | 900 | 100 | 0,72 | 154.000 | 163.000 |
| A6 | S/B | 60 | 2991 | 7,14 | 2,53 | 870 | 130 | 1,15 | 111.000 | 122.000 |
| A7 | S/B | 50 | 2991 | 7,14 | 2,53 | 792 | 171 | 1,15 | 130.000 | 141.000 |
| A8 | S/B | 60 | 2991 | 11,9 | 4,73 | 870 | 130 | 1,91 | 59.000 | 64.000 |
| A9 | S/B | 60 | 2991 | 5,95 | 2,36 | 870 | 130 | 0,96 | 119.000 | 131.000 |
| A10 | S/B | 60 | 2991 | 5,1 | 1,81 | 870 | 130 | 0,82 | 143.000 | 155.000 |

### Blockcopolymer B:

Ein sternförmiges Blockcopolymer B1 (26 Gew.-% Butadien, 74 Gew.-% Styrol) mit statistischen Copolymerblöcken B/S wurde durch sequentielle anionische Polymerisation von Styrol und Butadien und anschließende Kopplung mit expoxidiertem Leinöl entsprechend Beispiel 15 aus WO 00/58380 hergestellt.

Die Blockcopolymermischungen B2 wurden nach den Angaben in Tabelle 2 durch sequentielle anionische Polymerisation mit zweifacher Initiatordosierung (sec.-Butyllithium BuLi) in Stufe 1 oder 2 bei einem Feststoffgehalt von ca. 30 Gew.-% in Cyclohexan bei Temperaturen im Bereich von 50 - 80°C hergestellt. Nach Beendigung der Polymerisation wurde mit Isopropanol abgebrochen und mit CO₂/Wasser angesäuert. Die Polymerisation wurde in Gegenwart von Kalium-tertiär-Amylat (KTA) bei einem molaren Lithium/Kalium-Verhältnis von 38/1 durchgeführt, um einen statistischen S/B-Copolymerblock zu erhalten. Die Blockcopolymeren wurden auf einem 16 mm Entgasungsextruder vom Lösungsmittel befreit.

Die erhaltenen Blockcopolymermischungen enthalten Blockcopolymere mit statistischen Copolymerblöcken der Struktur (I) S₁-(B/S)ₐ-(B/S)_{b}-S₂ mit einem zahlenmittleren Molekulargewicht von etwa 150.000 g/mol und der Struktur (II) (B/S)ₐ-(B/S)_{b}-S₃ mit einem zahlenmittleren Molekulargewicht von etwa 75.000 g/mol im molaren Verhältnis (I)/(II) entsprechend dem Initiatorverhältnis I₁/I₂.

**Tabelle 2:**

| Stufe | Dosierung | 2 |
|---|---|---|
| 1 | sec.-BuLi [mol] | 25,65 |
| | Styrol [kg] | 1950 |
| | KTA [mol] | 1,012 |
| 2a | sec.-BuLi [mol] | 12,82 |
| | Butadien/Styrol [kg] | 565/785 |
| 2b | Butadien/Styrol [kg] | 685/415 |
| 3 | Styrol | 600 |
| | I₁/I₂ | 2/1 |

### Komponente C

Als Komponente C wurde Standardpolystyrol PS 158 K mit einem M_{w} von 270.000 und einem Mₙ von 103.000 der BASF Aktiengesellschaft eingesetzt.

### Komponente D

Als Komponente D1 wurde medizinisches Weißöl mit einer Viskosität von 70 Centistokes bei 40°C, und als Komponente D2 Dioktyladipat (Plastomoll DOA der BASF Aktiengesellschaft) eingesetzt.

### Mischungen M1 bis M22

Die Blockcopofymermischungen wurden jeweils durch Aufschmelzen der in Tabelle 5 angegebenen Gewichtsteile der Blockcopolymeren A1 bis A10 und B1 bzw. B2 (für M12) sowie der Komponenten C (Polystyrol PS 158 K) und D (Weißöl, und im Falle der Mischungen M9 bis M11 außerdem Dioktyladipat), im Extruder hergestellt und anschließend zu Folien gepresst.

### Vergleichsversuche V1 bis V6

Die Mischungen wurden jeweils durch Aufschmelzen der in Tabelle 5 angegebenen. Gewichtsteile der Blockcopolymeren B1 bzw. B2 (für V5) sowie der Komponenten C und D im Extruder hergestellt und anschließend zu Folien verpresst. Sie enthalten keine Blockcopolymeren A.

Die mechanischen Werte wie E-Modul, Spannung und Dehnung wurden nach ISO 527 bestimmt und sind in Tabelle 3 angegeben.

Die Folien wurden in 8 cm lange und 1 cm breite Streifen geschnitten und in einer Zugmaschine bei 80°C bis nahe der im Vorversuch ermittelten Reißdehnung gereckt und im gereckten Zustand auf 23°C abgekühlt. Die Schrumpfwerte wurden gemäß Tabelle 4 nach 10 sec im Wasserbad bei 90°C ermittelt. Gemäß Tabelle 6 wurden auch vollständige Schrumpfkurven ermittelt. Hierzu wurde die Folie entsprechend einem einheitlichen Reckgrad von 4,5 (3,5 im Falle von V5 ) gereckt und dann der Schrumpf S in 10-Grad-Intervallen bestimmt.

**Tabelle 3:**

| Mischung | E-Modul | Spannung [N/mm²] bei | | | Dehnung [%] bei | | |
|---|---|---|---|---|---|---|---|
| | [N/mm²] | | | | | | |
| | | FS | Fmax | FR | FS | Fmax | FR |
| M1 | 774 | 14,1 | 25,3 | 25,3 | 4,8 | 325 | 325 |
| M2 | 802 | 17,6 | 23,4 | 25,3 | 4,3 | 271 | 272 |

| | | | | | | | |
|---|---|---|---|---|---|---|---|
| FS = Streckspannung; Fmax = Maximalspannung; FR = Reißspannung | | | | | | | |

**Tabelle 4:**

| Mischung | Reckgrad | | Schrumpf (bei 90°C) | |
|---|---|---|---|---|
| | Max. | Nach Schrumpf | Max | Bei Reckgrad |
| | | | | 4,5 |
| M3 | 6,1 | 2,1 | 65 | 58 |
| M4 | 5,3 | 2,1 | 60 | 57 |
| M5 | 5,0 | 2,2 | 55 | 54 |
| M6 | 5,3 | 2,1 | 61 | 60 |
| M7 | 5,9 | 2,7 | 55 | 50 |

**Tabelle 5: Zusammensetzung und Schrumpfverhalten der Mischungen**

| | Blockcopolymer | Teile | Teile | Teile | Teile | Teile | Teile | S | S | S | S | S | S | S |
|---|---|---|---|---|---|---|---|---|---|---|---|---|---|---|
| Mischung | A | A | B1 | B2 | C | D1 | D2 | (40°C) | (50°C) | (60°C) | (70°C) | (80°C) | (90°C) | (100°C) |
| M1 | A1 | 29,25 | 67,71 | | | 3,04 | | 1% | 1% | 6% | 18% | 39% | 59% | 70% |
| M2 | A2 | 29,25 | 67,71 | | | 3,04 | | 0% | 0% | 3% | 16% | 36% | 56% | 65% |
| M3 | A3 | 29,25 | 67,71 | | | 3,04 | | 0% | 0% | 2% | 11% | 34% | 58% | 68% |
| M4 | A4 | 29,25 | 67,71 | | | 3,04 | | 0% | 0% | 2% | 14% | 36% | 57% | 68% |
| M5 | A5 | 29,25 | 67,71 | | | 3,04 | | 0% | 1% | 7% | 20% | 37% | 54% | 66% |
| M6 | A6 | 29,25 | 67,71 | | | 3,04 | | 0% | 0% | 4% | 19% | 41% | 60% | 69% |
| M7 | A7 | 29,25 | 67,71 | | | 3,04 | | 0% | 1% | 8% | 19% | 34% | 50% | 60% |
| M8 | A6 | 30 | 68,45 | | | 1,55 | | 0% | 0% | 5% | 21% | 41% | 59% | 68% |
| M9 | A6 | 29,25 | 67,71 | | | 1,54 | 1,5 | 0% | 0% | 4% | 19% | 41% | 59% | 68% |
| M10 | A6 | 29 | 67,47 | | | 1,53 | 2 | 0% | 0% | 3% | 18% | 41% | 59% | 69% |
| M11 | A6 | 28,75 | 67,22 | | | 1,53 | 2,5 | 0% | 1% | 5% | 19% | 41% | 58% | 65% |
| M12 | A6 | 29,25 | | 67,71 | | 3,04 | | 0% | 1% | 7% | 22% | 45% | 59% | 66% |
| M13 | A2 | 27 | 61,60 | | 9,48 | 3,27 | | 1% | 1% | 2% | 11% | 31 % | 54% | 67% |
| M14 | A2 | 24 | 54,76 | | 18,96 | 3,49 | | 1% | 0% | 2% | 10% | 30% | 50% | 65% |
| M15 | A2 | 21 | 47,91 | | 28,44 | 3,70 | | 0% | 0% | 2% | 10% | 24% | 45% | 63% |
| M16 | A2 | 18 | 41,07 | | 37,92 | 3,92 | | 2% | 1% | 3% | 9% | 20% | 40% | 61% |
| | A8/A9 | | | | | | | | | | | | | |
| M17 | (1:2) | 29 | 67,96 | | | 3,04 | | 0% | 1% | 5% | 20% | 39% | 56% | 65% |
| | A8/A9 | | | | | | | | | | | | | |
| M18 | (1:1) | 29 | 67,96 | | | 3,04 | | 0% | 1% | 5% | 18% | 38% | 57% | 65% |
| | A8/A9 | | | | | | | | | | | | | |
| M19 | (2:1) | 29 | 67,96 | | | 3,04 | | 0% | 0% | 4% | 16% | 37% | 57% | 66% |
| | A8/A10 | | | | | | | | | | | | | |
| M20 | (1:2) | 29 | 67,96 | | | 3,04 | | 0% | 1% | 9% | 24% | 42% | 61% | 68% |
| | A8/A10 | | | | | | | | | | | | | |
| M21 | (1:1) | 29 | 67,96 | | | 3,04 | | 0% | 1% | 8% | 21% | 41% | 61% | 68% |
| | A81A10 | | | | | | | | | | | | | |
| M22 | (2:1) | 29 | 67,96 | | | 3,04 | | 0% | 1% | 7% | 20% | 39% | 55% | 63% |
| V1 | | | 97,78 | | | 2,22 | | 5% | 5% | 12% | 26% | 41% | 55% | 66% |
| V2 | | | 88,00 | | 9,48 | 2,52 | | 6% | 6% | 13% | 25% | 39% | 54% | 65% |
| V3 | | | 78,22 | | 18,96 | 2,82 | | 9% | 10% | 15% | 31% | 37% | 51% | 62% |
| V4 | | | 68,45 | | 28,44 | 3,12 | | 0% | 6% | 12% | 23% | 37% | 51% | 63% |
| V5 | | | | 68,45 | 28,44 | 3,12 | | 1% | 2% | 8% | 18% | 30% | 42% | 51% |
| V6 | | | 58,67 | | 37,92 | 3,42 | | 7% | 6% | 9% | 18% | 30% | 44% | 56% |

## Patentansprüche

1. Mischung enthaltend
a) 5 bis 50 Gew.-% eines Blockcopolymeren A, welches ein oder mehrere Copolymerblöcke (B/S)_{A} aus jeweils 65 bis 95 Gew.-% vinylaromatischen Monomeren und 35 bis 5 Gew.-% Dienen und einer Glasübergangstemperatur Tg_{A} im Bereich von 40° bis 90°C enthält,
b) 95 bis 50 Gew.-% eines Blockcopolymeren B, welches mindestens einen Hartblock S aus vinylaromatischen Monomeren und ein oder mehrere Copolymerblöcke (B/S)_{B} aus jeweils 20 bis 60 Gew.-% vinylaromatischen Monomeren und 80 bis 40 Gew.-% Dienen und einer Glastemperatur Tg_{B} im Bereich von -70° bis 0°C enthält,
c) 0 bis 45 Gew.-% eines von A und B verschiedenen Blockcopolymeren C oder Polystyrol und
d) 0 bis 6 Gew.-% eines Plastifizierungsmittels.

2. Mischung nach Anspruch 1, **dadurch gekennzeichnet, dass** sie
a) 20 bis 40 Gew.-% des Blockcopolymeren A,
b) 80 bis 60 Gew.-% des Blockcopolymeren Bund
c) 0 bis 20 Gew.-% eines von A und B verschiedenen Blockcopolymeren C oder Polystyrol enthält.

3. Mischung nach Anspruch 1 oder 2, **dadurch gekennzeichnet, dass** der Copolymerblock (B/S)_{A} des Blockcopolymeren A eine zahlenmittlere Molmasse Mₙ im Bereich von 50.000 bis 150.000 g/mol aufweist.

4. Mischung nach einem der Ansprüche 1 bis 3, **dadurch gekennzeichnet, dass** der Copolymerblock (B/S)_{A} des Blockcopolymeren A eine Glasübergangstemperatur im Bereich von 50° bis 70°C aufweist.

5. Mischung nach einem der Ansprüche 1 bis 4, **dadurch gekennzeichnet, dass** das Blockcopolymere A aus einem Copolymerblock (B/S)_{A} besteht.

6. Mischung nach einem der Ansprüche 1 bis 4, **dadurch gekennzeichnet, dass** das Blockcopolymere A die Struktur S-(B/S)_{A}-S aufweist, wobei S für einen Hartblock aus vinylaromatischen Monomeren steht.

7. Mischung nach einem der Ansprüche 1 bis 6, **dadurch gekennzeichnet, dass** die Copolymerblöcke (B/S)_{A} und (B/S)_{B} der Blockcopolymeren A und B eine statistischer Verteilung der vinylaromatischen Monomeren und Dienen aufweisen.

8. Mischung nach einem der Ansprüche 1 bis 7, **dadurch gekennzeichnet, dass** das Blockcopolymere B eine sternförmige Struktur mit mindestens zwei endständigen Hartblöcken S₁ und S₂ mit unterschiedlichem Molekulargewicht aus vinylaromatischen Monomeren aufweist und der Anteil der Summe der Hartblöcke S mindestens 40 Gew.-%, bezogen auf das gesamte sternförmige Blockcopolymer B, beträgt.

9. Mischung nach Anspruch 8, **dadurch gekennzeichnet, dass** das sternförmige Blockcopolymere B endständige Blöcke S₁ mit einer zahlenmittleren Molmasse Mₙ im Bereich von 5.000 bis 30.000 g/mol und S₂ mit einer zahlenmittleren Molmasse Mₙ im Bereich von 35.000 bis 150.000 g/mol aufweist.

10. Verwendung der Mischung nach einem der Ansprüche 1 bis 9 zur Herstellung von Schrumpffolien.

11. Schrumpffolie, hergestellt aus einer Mischung nach einem der Ansprüche 1 bis 9.

## Claims

1. A mixture comprising
a) from 5 to 50% by weight of a block copolymer A which comprises one or more copolymer blocks (B/S)_{A} each composed of from 65 to 95% by weight of vinylaromatic monomers and from 35 to 5% by weight of dienes and of a glass transition temperature Tg_{A} in the range from 40° to 90°C,
b) from 95 to 50% by weight of a block copolymer B which comprises at least one hard block S composed of vinylaromatic monomers and comprises one or more copolymer blocks (B/S)_{B} each composed of from 20 to 60% by weight of vinylaromatic monomers and from 80 to 40% by weight of dienes and of a glass transition temperature Tg_{B} in the range from -70° to 0°C,
c) from 0 to 45% by weight of polystyrene or of a block copolymer C other than A and B, and
d) from 0 to 6% by weight of a plasticizer.

2. The mixture according to claim 1, which comprises
a) from 20 to 40% by weight of the block copolymer A,
b) from 80 to 60% by weight of the block copolymer B, and
c) from 0 to 20% by weight of polystyrene or of a block copolymer C other than A and B.

3. The mixture according to claim 1 or 2, wherein the copolymer block (B/S)_{A} of the block copolymer A has a number-average molar mass Mₙ in the range from 50 000 to 150 000 g/mol.

4. The mixture according to any of claims 1 to 3, wherein the copolymer block (B/S)_{A} of the block copolymer A has a glass transition temperature in the range from 50° to 70°C.

5. The mixture according to any of claims 1 to 4, wherein the block copolymer A is composed of one copolymer block (B/S)_{A}.

6. The mixture according to any of claims 1 to 4, wherein the block copolymer A has the structure S-(B/S)_{A}-S, where S is a hard block composed of vinylaromatic monomers.

7. The mixture according to any of claims 1 to 6, wherein the copolymer blocks (B/S)_{A} and (B/S)_{B} of the block copolymers A and B have random distribution of the vinylaromatic monomers and dienes.

8. The mixture according to any of claims 1 to 7, wherein the block copolymer B has a star-shaped structure having at least two terminal hard blocks S₁ and S₂ with different molecular weight composed of vinylaromatic monomers, and the proportion of the entirety of the hard blocks S is at least 40% by weight, based on the entire star-shaped block copolymer B.

9. The mixture according to claim 8, wherein the star-shaped block copolymer B has terminal blocks S₁ with a number-average molar mass Mₙ in the range from 5000 to 30 000 g/mol and S₂ with a number-average molar mass Mₙ in the range from 35 000 to 150 000 g/mol.

10. The use of the mixture according to any of claims 1 to 9 for production of shrink films.

11. A shrink film, produced from a mixture according to any of claims 1 to 9.

## Revendications

1. Mélange contenant
a) 5 à 50% en poids d'un copolymère à blocs A, qui contient un ou plusieurs blocs copolymères (B/S)_{A} constitués à chaque fois par 65 à 95% en poids de monomères aromatiques de vinyle et 35 à 5% en poids de diènes et qui présente une température de transition vitreuse Tg_{A} dans la plage de 40°C à 90°C,
b) 95 à 50% en poids d'un copolymère à blocs B, qui contient au moins un bloc dur S constitué par des monomères aromatiques de vinyle et un ou plusieurs blocs copolymères (B/S)_{B} constitués à chaque fois par 20 à 60% en poids de monomères aromatiques de vinyle et 80 à 40% en poids de diènes et qui présente une température de transition vitreuse Tg_{B} dans la plage de -70°C à 0°C,
c) 0 à 45% en poids d'un copolymère à blocs C différent de A et de B ou de polystyrène et
d) 0 à 6% en poids d'un plastifiant.

2. Mélange selon la revendication 1, **caractérisé en ce qu'**il contient
a) 20 à 40% en poids du copolymère à blocs A,
b) 80 à 60% en poids du copolymère à blocs B et
c) 0 à 20% en poids d'un copolymère à blocs C différent de A et de B ou de polystyrène.

3. Mélange selon la revendication 1 ou 2, **caractérisé en ce que** le bloc copolymère (B/S)_{A} du copolymère à blocs A présente une masse molaire numérique moyenne Mₙ dans la plage de 50 000 à 150 000 g/mole.

4. Mélange selon l'une quelconque des revendications 1 à 3, **caractérisé en ce que** le bloc copolymère (B/S)_{A} du copolymère à blocs A présente une température de transition vitreuse dans la plage de 50°C à 70°C.

5. Mélange selon l'une quelconque des revendications 1 à 4, **caractérisé en ce que** le copolymère à blocs A est constitué par un bloc copolymère (B/S)_{A}.

6. Mélange selon l'une quelconque des revendications 1 à 4, **caractérisé en ce que** le copolymère à blocs A présente la structure S-(B/S)_{A}-S, où S représente un bloc dur en monomères aromatiques de vinyle.

7. Mélange selon l'une quelconque des revendications 1 à 6, **caractérisé en ce que** les blocs copolymères (B/S)_{A} et (B/S)_{B} des copolymères à blocs A et B présentent une répartition statistique des monomères aromatiques de vinyle et des diènes.

8. Mélange selon l'une quelconque des revendications 1 à 7, **caractérisé en ce que** le copolymère à blocs B présente une structure en forme d'étoile comprenant au moins deux blocs durs, S₁ et S₂, en position terminale présentant un poids moléculaire différent en monomères aromatiques de vinyle et la proportion de la somme des blocs durs S est d'au moins 40% en poids, par rapport à la totalité du copolymère à blocs en forme d'étoile B.

9. Mélange selon la revendication 8, **caractérisé en ce que** le copolymère à blocs en forme d'étoile B présente des blocs en position terminale S₁ présentant une masse molaire numérique moyenne Mₙ dans la plage de 5000 à 30 000 g/mole et S₂ présentant une masse molaire numérique moyenne Mₙ dans la plage de 35 000 à 150 000 g/mole.

10. Utilisation du mélange selon l'une quelconque des revendications 1 à 9 pour la production de feuilles rétractables.

11. Feuille rétractable, produite à partir d'un mélange selon l'une quelconque des revendications 1 à 9.
